# EUROPÄISCHE PATENTANMELDUNG

(11) **EP 1 060 954 A2**
(43) Veröffentlichungstag der Anmeldung: **20.12.2000**
(21) Anmeldenummer: 00109769.0
(22) Anmeldetag: 09.05.2000
(51) Int. Cl.: B60R 19/40

(54) **Stossenergieaufnahmevorrichtung**

(30) Priorität: 19.06.1999 DE 19928099
(71) Anmelder: DaimlerChrysler AG, 70567 Stuttgart (DE)
(72) Erfinder: Eipper, Konrad, 72108 Rottenburg (DE); Scheffzük, Matthias, 72074 Tübingen (DE)

(57) **Zusammenfassung**

Eine Stoßenergieaufnahmevorrichtung (1) für ein Kraftfahrzeug weist ein Stoßenergie von einem Prallelement aufnehmendes Ausfahrelement (2) auf, das in Längsrichtung des Kraftfahrzeuges aus einer Ausgangsposition, in der es im wesentlichen in einem Fahrzeuglängsträger (6) aufgenommen ist, durch eine Auslöseeinrichtung (10), die mit einer Aufprallüberwachungseinrichtung (11) des Kraftfahrzeuges verbundenen ist, in eine Arbeitsposition bewegbar und in dieser arretierbar ist. Dabei ist das Ausfahrelement (2) in einem in dem Fahrzeuglängsträger (6) angeordneten und mit diesem verbundenen Zylinder (5) geführt. Der Zylinder (5) ist mit dem Fahrzeuglängsträger (6) über eine Stülpprofileinrichtung (7) verbunden, welche bei Stoßenergieaufnahme des in seine Arbeitsposition ausgefahrenen und darin arretierten Ausfahrelementes (2) aus einer Ruheposition in eine Deformationsposition überführbar ist.

## Beschreibung

Die Erfindung betrifft eine Stoßenergieaufnahmevorrichtung für ein Kraftfahrzeug nach der im Oberbegriff des Patentanspruches 1 näher genannten Art.

Zur Aufnahme der Stoßenergie bei einem Aufprall mit geringer Fahrzeuggeschwindigkeit weisen Kraftfahrzeuge Stoßfänger bzw. Stoßstangen mit Prallelementen auf, welche soviel Stoßenergie absorbieren sollen, daß eine Beschädigung anderer Bauteile des Fahrzeugs wie z.B. der Beleuchtung, der Karosserie und der Längsträger, vermieden wird. Der Betrag der absorbierbaren Energie hängt dabei von dem zulässigen Deformationsweg und der Widerstandskraft des Stoßfängersystems ab, wobei das Kraftniveau von deren Prallelementen so niedrig gewählt werden muß, daß eine Stauchung der sie tragenden Fahrzeugbauteile bei einer Deformation der Prallelemente verhindert wird.

Da der benötigte Deformationsweg nur bei einem Kraftfahrzeugaufprall benötigt wird und ein entsprechender Vorbau an einem Kraftfahrzeug im Normalfahrbetrieb eine unerwünschte Verlängerung des Kraftfahrzeuges darstellt, bietet es sich an, ein Fahrzeug mit ausfahrbaren Prallelementen auszustatten, die durch eine bekannte Sensorik, welche ein Hindernis rechtzeitig vor dem Zusammenstoß erkennt, derart angesteuert werden, daß sie unmittelbar vor einem Aufprall des Kraftfahrzeuges ausfahren.

Aus der DE 196 54 559 ist eine derartige Stoßverzehrvorrichtung für ein Kraftfahrzeug mit einem Stoßenergie absorbierenden Bauteil bekannt, welches in Längsrichtung des Kraftfahrzeuges aus einer Ausgangsposition, in der es im wesentlichen in einem Fahrzeuglängsträger aufgenommen ist, in eine Aufprallposition ausfahrbar ist. Im Fall eines bevorstehenden Unfalls wird automatisch das Stoßenergie absorbierende Bauteil in seine vom Fahrzeug vorstehende Aufprallposition getrieben, in der die volle Stoßenergieaufnahmekapazität zur Verfügung steht. Das Stoßenergie absorbierende Bauteil ist hierzu mit einem in dem Fahrzeuglängsträger angeordneten Zylinder und einem ein verformbares Reduzierrohr darstellendem Kolben ausgebildet, welcher durch Druckgas in die Aufprallposition bewegt werden kann. Bei einem Aufprall wird die Stoßenergie von einem Stoßfänger bzw. Prallelementen auf das Reduzierrohr übertragen, wobei dieses durch einen Reduzierring in Längsrichtung des Längsträgers hindurchgepreßt wird.

Diese bekannte Lösung mit einem Reduzierring ist jedoch hinsichtlich des Wirkungsgrades bei höheren Aufprallgeschwindigkeit und des hohen Fertigungsaufwandes für den Reduzierring nicht zufriedenstellend. Darüber hinaus hat diese Lösung den Nachteil, daß der Zylinder mit dem darin angeordneten Reduzierring im Bereich des Reduzierringes über den Längsträger auch bei eingeschobenem Reduzierrohr vorsteht, so daß der Längsträger um einen festen Block verlängert wird, der die freie Deformationslänge bis zum Längsträger reduziert.

Aus der EP 0 857 619 A1 ist eine weitere Energieaufnahmevorrichtung mit einem aus einem Längsträger ausfahrbaren Ausfahrelement bekannt, das an seinem vorderen Ende einen Querträger als Prallelement aufweist, welches bei einem Aufprall deformiert wird. Auch bei dieser Lösung ist die Stoßenergieabsorption, welche durch Verformung eines Hohlprofils an dem Ausfahrelement realisiert wird, unzureichend, wobei darüber hinaus keine Führung für die axiale Deformationsbewegung vorhanden ist, so daß eine ungleichmäßige Kraftaufnahme an dem Ausfahrelement gegeben ist.

Die DE 296 06 069 U1 beschreibt eine weitere Stoßenergieaufnahmevorrichtung mit einem aus einem Zylinder austreibbaren Stoßabsorber, welcher teleskopartig aufgebaut ist und bei einem Aufprall zusammengeschoben wird.

Neben diesen bekannten Lösungen, welche darauf abzielen, durch verschiebbare Ausfahrelemente einen möglichst langen Deformationsweg zu bieten, sind zahlreiche Stülprohr-Energieabsorptionselemente bekannt, welche nach dem Prinzip der rollenden Biegung arbeiten und eine hohe Energieabsorption mit gleichmäßigem Kraftniveau ermöglichen.

Aus der DE 42 41 103 ist ein solches Energieabsorptionselement in Form eines Pralldämpfers bekannt, der ein nach außen umstülpbares Stülprohr aufweist, wobei sich das Stülprohr zwecks Umstülpung am zugeordneten Ende an einem geeigneten Stülpwerkzeug abstützt. Darüber hinaus umschließt das Stülprohr eine fluidgefüllte Druckkammer mit einem drosselnden Abfluß.

In der DE PS 11 72 558 wird eine Stoßdämpfvorrichtung beschrieben, bei der eine umstülpbare Hülse aus verformbarem Metall zwischen zwei gegeneinander und ineinander verschiebbaren, zylinderförmigen Teilen verschiedenen Durchmessers angeordnet ist, wobei sie mit dem einen Stirnendbereich am einen und mit dem anderen Stirnendbereich am anderen zylinderförmigen Teil fest angebracht ist.

Die DE 41 34 545 C2 offenbart ein mechanisches Energieabsorptionselement mit zwei ineinander verschiebbaren Profilen, an denen ein beim Verschieben der Profile aufgrund einwirkender Kräfte verformbarer Materialstreifen aus biegeweichem und reißfestem Material befestigt ist, wobei die Befestigung mit mindestens einem der beiden Profile flächig erfolgt und der wesentliche Energieabsorptionsbeitrag darin besteht, daß sich beim Verschieben der Profile diese flächige Befestigung sukzessive löst.

All diesen bekannten Lösungen ist jedoch gemeinsam, daß sie eine je nach gewünschtem Betrag der Energieabsorption erforderliche Vorbaulänge bedingen.

Eine Kombination von ausfahrbarem Deformationselement und dem Wirkprinzip der Rollbiegung beschreibt die DE 198 03 156, bei der ein Stülpprofil in normaler Ruhelage in einer Deformationsposition gehalten ist, aus der das Stülpprofil bei Aktivierung einer Antriebsvorrichtung schlagartig in eine Absorptionsposition überführbar ist. Bei einer Stoßbelastung wird das Stülpprofil wieder in seine Deformationsposition zurückgestülpt. Mit der mehrfachen Rollbiegung und der zusätzlichen Stoßenergieaufnahme ist das Material dieses bekannten Stülpprofiles jedoch sehr hohen Belastungen ausgesetzt.

Es ist Aufgabe der vorliegenden Erfindung, eine Stoßenergieaufnahmevorrichtung für ein Kraftfahrzeug zu schaffen, mit der eine möglichst geringe Vorbaulänge im Ruhezustand realisierbar ist, und mit der bei einem Fahrzeugaufprall eine hohe Energieabsorption mit gleichmäßigem Kraftniveau bei weitgehender Vermeidung einer Blockbildung bei der Deformation erzielt werden soll.

Erfindungsgemäß wird diese Aufgabe durch eine Stoßenergieaufnahmevorrichtung gemäß den kennzeichnenden Merkmalen des Patentanspruches 1 gelöst.

Die erfindungsgemäße Stoßenergieaufnahmevorrichtung hat den Vorteil, daß sie im normalen Fahrbetrieb bei in den Längsträgern eingefahrenem Ausfahrelement eine geringe Baugröße aufweist und optisch unauffällig im Fahrzeug positioniert ist. Dadurch, daß das Ausfahrelement durch die Auslöseeinrichtung schlagartig in seine Arbeitsposition bewegbar und in dieser arretierbar ist, wird im Bedarfsfall dennoch rechtzeitig ein Vorbau mit einem Deformationsweg für einen Aufprall des Fahrzeuges zur Verfügung gestellt. Bei der Verschiebung des aus Zylinder und Ausfahrelement bestehenden Baukörpers infolge einer Stoßbelastung kann die Stülpprofileinrichtung durch ein Abrollen sehr hohe Energie aufnehmen, wobei die sich axial verschiebenden Bauteile bei der Deformation axial geführt sind. Dies bewirkt wiederum eine vorteilhafte gleichmäßige Kraftaufnahme.

Weiterhin vorteilhaft ist bei der erfindungsgemäßen Stoßenergieaufnahmevorrichtung, daß das Ausfahrelement und der Zylinder bei entsprechender Abrollänge der Stülpprofileinrichtung soweit in den Längsträger hineingeschoben werden können, daß diese Bauteile bei einer anschließenden Deformation des Fahrzeuglängsträgers nicht zu einer Blockbildung beitragen, welche die Deformationslänge des Fahrzeuglängsträgers verkürzen würde.

Der Wirkungsgrad der Stoßenergieabsorption läßt sich bei der erfindungsgemäßen Stoßenergieaufnahmevorrichtung durch Variation der Durchmesser und Wanddicken des Ausfahrelementes, des Zylinders und der Stülpprofileinrichtung optimal einstellen.

Die konstruktive Ausgestaltung der erfindungsgemäßen Stoßenergieaufnahmevorrichtung erweist sich vorteilhafterweise als einfach, da der Zylinder und das in ihm gelagerte Ausfahrelement als hydraulische oder pneumatische Zylinder-Kolben-Einheit mit bekannten mechanischen, elektrischen oder pyrotechnischen Stellelementen oder als einfache Feder-Zylinder-Einheit, welche eine vorgespannt eingebaute und bei unmittelbar bevorstehendem Fahrzeugaufprall entriegelbare Feder aufweist, ausgebildet werden kann.

Weitere Vorteile und vorteilhafte Ausgestaltungen der Erfindung ergeben sich aus den Unteransprüchen und dem nachfolgend anhand der Zeichnung prinzipmäßig beschriebenen Ausführungsbeispiel.

Es zeigt:
- Fig. 1: in teilweisem Längsschnitt eine Prinzipdarstellung einer erfindungsgemäßen Stoßenergieaufnahmevorrichtung in Ruhestellung;
- Fig. 2: eine Prinzipdarstellung der Stoßenergieaufnahmevorrichtung nach Fig. 1 bei ausgefahrenem Ausfahrelement unmittelbar vor einem Fahrzeugaufprall;
- Fig. 3: eine Prinzipdarstellung der Stoßenergieaufnahmevorrichtung nach Fig. 1 und Fig. 2 nach einer Deformation einer Stülpprofileinrichtung infolge eines Fahrzeugaufpralls; und
- Fig. 4: eine Prinzipdarstellung der Stoßenergieaufnahmevorrichtung nach Fig. 1 bis Fig. 3 nach Deformation der Stülpprofileinrichtung und anschließender Deformation eines Crash-Elementes.

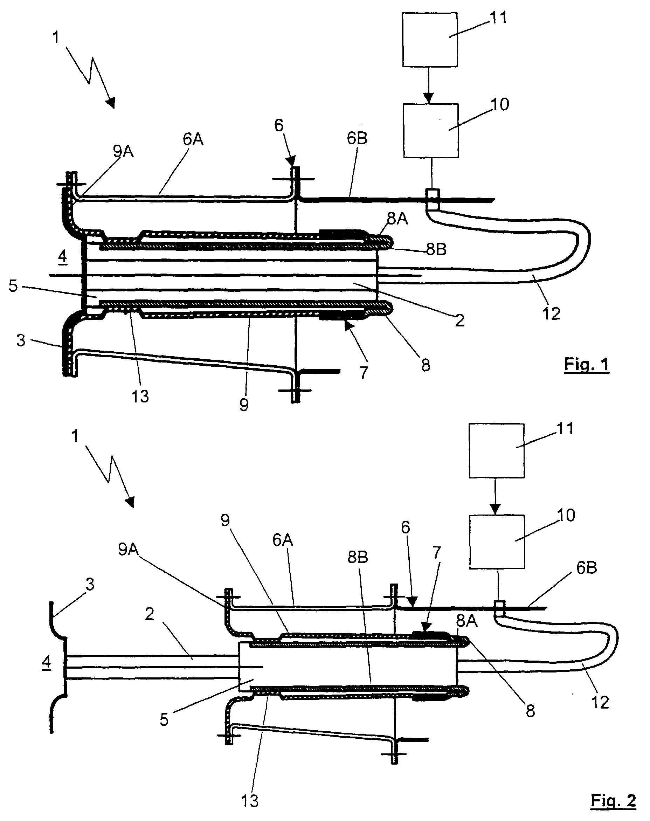

In den Figuren 1 bis 4 ist lediglich schematisch eine Stoßenergieaufnahmevorrichtung 1 dargestellt, welche als Stoßdämpfung für einen Front- oder Heckbereich eines Kraftfahrzeuges vorgesehen ist. Die Stoßenergieaufnahmevorrichtung 1 weist ein kolbenartiges Ausfahrelement 2 auf, welches an einem Ende über einen Biegeträgeranschluß 3 mit einem Prallelement 4, welches vorliegend einen herkömmlichen Stoßfänger darstellt, verbunden ist. An seinem gegenüberliegenden Ende ist das Ausfahrelement 2 in einem abdichteten, mit Drucköl beaufschlagbaren Zylinder 5 gelagert, welcher rohrförmig ausgeführt ist und in einem Fahrzeuglängsträger 6 angeordnet ist. Der Zylinder 5 ist mit dem Fahrzeuglängsträger 6 über eine Stülpprofileinrichtung 7 verbunden, welche sich aus einem Stülpprofil 8 und einem rohrförmigen Mantelprofil 9 zusammensetzt.

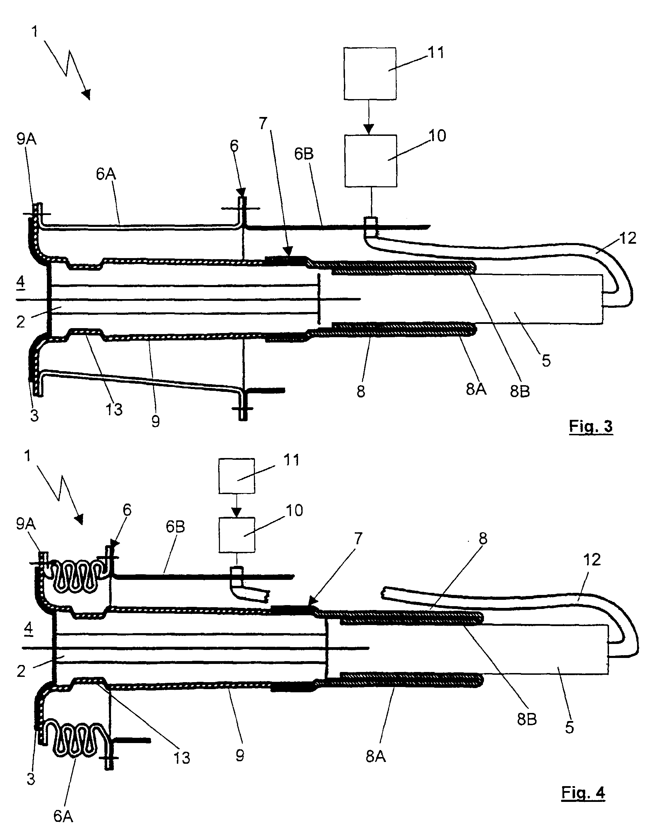

Die Stoßenergieaufnahmevorrichtung 1 ist dabei so vorgesehen, daß das Ausfahrelement 2, welches bei normalem Fahrbetrieb in einer in Fig. 1 gezeigten Ausgangsposition in dem Fahrzeuglängsträger 6 aufgenommen ist, durch eine Auslöseeinrichtung 10, welche mit einer Aufprallüberwachungseinrichtung 11 des Kraftfahrzeuges verbunden ist, in Längsrichtung des Kraftfahrzeuges in eine in Fig. 2 dargestellte Arbeitsposition bewegbar und in dieser arretierbar ist, um Stoßenergie von dem Prallelement 4 aufnehmen zu können.

Wie in Fig. 1 gezeigt, ist das Ausfahrelement 2 bei eingefahrener Stoßenergieaufnahmevorrichtung 1 soweit in den mit einer Zufuhrleitung 12 für Druckmittel verbundenen Zylinder 5 eingeschoben, daß die gesamte Anordnung aus Zylinder 5, Ausfahrelement 2, Stülpprofil 8 und Mantelprofil 9 in dem Fahrzeuglängsträger 6 aufgenommen ist, wobei der Biegeträgeranschluß 3 des Prallelementes 4 formschlüssig an einem mit dem Fahrzeuglängsträgerende bündigen Flansch 9A des Mantelprofiles 9 anliegt.

Das Mantelprofil 9 ist mit seinem Flansch 9A an dem Fahrzeuglängsträger 6 angeschraubt, wobei der Fahrzeuglängsträger 6 im vorliegenden Ausführungsbeispiel an seinem dem Prallelement 4 zugewandten Endbereich mit einem separaten Crash-Element 6A ausgebildet ist. An seinem Außendurchmesser ist das Mantelprofil 9 mit einem äußeren Bereich 8A des Stülpprofiles 8 fest verbunden, wobei der äußere Bereich 8A des Stülpprofiles 8 über einen balgförmigen Übergang mit einem inneren Bereich 8B des Stülpprofiles 8 verbunden ist. Der balgförmige Übergang wird in an sich bekannter Weise einer nach dem Stülpprinzip arbeitenden rollenden Biegung unterworfen, sobald auf das Stülpprofil 8 eine Druck- oder Zugbelastung koaxial zur Mittellängsachse des Stülpprofiles 8 ausgeübt wird. Durch diese Verformungsarbeit kann bei einer solchen Bewegung des Stülpprofiles 8 Aufprallenergie absorbiert werden.

Um die Energieabsorptionskapazität des Stülpprofiles 8 nutzen zu können, ist der innere Bereich 8B des Stülpprofiles am Außendurchmesser des Zylinders 5 befestigt, welcher mit einer als Einprägung in dem Mantelprofil 9 ausgebildeten Führungseinrichtung 13 axial geführt in dem Mantelprofil 9 angeordnet ist.

Fig. 2 zeigt den Zustand der Stoßenergieaufnahmevorrichtung 1 unmittelbar vor einem von der Aufprallüberwachungseinrichtung 11 erkannten Fahrzeugaufprall, wobei die Auslöseeinrichtung 10 das Ausfahrelement 2 schlagartig durch Druckbeaufschlagung mit Öl in seine Arbeitsposition bewegt, so daß die Stoßenergieaufnahmevorrichtung 1 bereits bei dem Fahrzeugaufprall eine erhöhte Deformationslänge zur Verfügung stellt.

Bei einem nachfolgenden Fahrzeugaufprall wird das auf herkömmliche Weise in ausgefahrenem Zustand arretierte Ausfahrelement 2 zusammen mit dem Zylinder 5 in den Fahrzeuglängsträger 6 gedrückt, wobei der Zylinder 5 durch die Rollbiegung des Stülpprofiles 8 aus seiner in den Fig. 1 und 2 gezeigten Ruheposition in eine Deformationsposition verschoben wird, in der er aus dem Mantelprofil 9 ausgeschoben angeordnet ist. Bei der Verschiebung wird im Bereich der balgartigen Stülpung des Stülpprofiles 8 Verformungsarbeit verrichtet.

Fig. 3 zeigt den Zustand der Stoßenergieaufnahmevorrichtung 1 nach maximaler Verformungsarbeit des Stülpprofiles 8, wobei der Biegeträgeranschluß 3 des Prallelementes 4 auf den Längsträger 6 bzw. den Flansch 9A des Mantelprofiles 9 auftrifft.

Wie in Fig. 4 dargestellt ist, wird bei einem vorhandenen Crash-Element 6A eine weitere Deformationsarbeit bei einem Fahrzeugaufprall mit höherer Geschwindigkeit durch das Crash-Element 6A verrichtet, so daß auch bei bereits vollständig in den Fahrzeuglängsträger 6A verschobenem Ausfahrelement zunächst keine Beschädigung eines Hauptbauteiles 6B des Fahrzeuglängsträgers 6 auftritt. Da das Ausfahrelement 2 mit dem Zylinder 9 mittels dem Stülpprofil 8 vollständig in den Hauptteil 6B des Fahrzeuglängsträgers 6 verschiebbar ist, stellen diese Komponenten bei der in Fig. 2 gezeigten Deformation des als Längsträger ausgebildeten Crash-Elementes 6A auch keinen den Deformationsweg behinderten Block dar.

Dem Fachmann ist anhand der schematischen Darstellung nach den Fig. 1 bis 4 klar, daß die erfindungsgemäße Stoßenergieaufnahmevorrichtung 1 nicht lediglich ein einzelnes mit einem Stülpprofil zusammenwirkendes Ausfahrelement aufweisen kann, sondern daß auch mehrere, parallel angeordnete und gemeinsam von einer Aufprallüberwachungseinrichtung angesteuerte Ausfahrelemente die mit einem gemeinsamen oder jeweils mit einem eigenen Prallelement verbunden sind, vorgesehen sein können.

Es ist ebenfalls selbstverständlich, daß der Fahrzeuglängsträger 6 anstelle des einzigen beschriebenen Crash-Elementes mehrere derartiger Crash-Elemente in axialer Anordnung aufweisen kann.

## Patentansprüche

1. Stoßenergieaufnahmevorrichtung für ein Kraftfahrzeug mit einem Stoßenergie von einem Prallelement aufnehmenden Ausfahrelement, das in Längsrichtung des Kraftfahrzeuges aus einer Ausgangsposition, in der es im wesentlichen in einem Fahrzeuglängsträger aufgenommen ist, durch eine Auslöseeinrichtung, die mit einer Aufprallüberwachungseinrichtung des Kraftfahrzeuges verbundenen ist, in eine Arbeitsposition bewegbar und in dieser arretierbar ist, wobei das Ausfahrelement in einem in dem Fahrzeuglängsträger angeordneten und mit diesem verbundenen Zylinder geführt ist,
**dadurch gekennzeichnet,**
daß der Zylinder (5) mit dem Fahrzeuglängsträger (6) über eine Stülpprofileinrichtung (7) verbunden ist, welche bei Stoßenergieaufnahme des in seine Arbeitsposition ausgefahrenen und darin arretierten Ausfahrelementes (2) aus einer Ruheposition in eine Deformationsposition überführbar ist.

2. Stoßenergieaufnahmevorrichtung nach Anspruch 1,
**dadurch gekennzeichnet,**
daß die Stülpprofileinrichtung (7) wenigstens ein Stülpprofil (8) aufweist, welches mit einem inneren Bereich (8B) und einem äußeren Bereich (8A) ausgebildet ist, wobei einer der gegeneinander verschiebbaren Bereiche (8A, 8B) mit dem Zylinder (5) und der andere Bereich (8A bzw. 8B) mit dem Fahrzeuglängsträger (6) verbunden ist.

3. Stoßenergieaufnahmevorrichtung nach Anspruch 2,
**dadurch gekennzeichnet,**
daß das Stülpprofil (8) mit dem Fahrzeuglängsträger (6) über ein in diesem angeordnetes Mantelprofil (9) verbunden ist, wobei der Zylinder (5) in Ruheposition im wesentlichen in dem Mantelprofil (9) und in Deformationsposition aus dem Mantelprofil (9) ausgeschoben angeordnet ist.

4. Stoßenergieaufnahmevorrichtung nach Anspruch 3,
**dadurch gekennzeichnet,**
daß das Stülpprofil (8) mit seinem inneren Bereich (8B) an einem Außendurchmesser des Zylinders (5) und mit seinem äußeren Bereich (8A) an einem Außendurchmesser des Mantelprofiles (9) befestigt ist.

5. Stoßenergieaufnahmevorrichtung nach Anspruch 3,
**dadurch gekennzeichnet,**
daß in dem Mantelprofil (9) in einem dem Prallelement (4) zugewandten Bereich eine Führungseinrichtung (13) für den Zylinder (5) mit dem daran befestigten Stülpprofil (8) vorgesehen ist.

6. Stoßenergieaufnahmevorrichtung nach Anspruch 5,
**dadurch gekennzeichnet,**
daß die Führungseinrichtung (13) als eine wenigstens über einen Teil seines Umfanges ausgeformte Einprägung in dem Mantelprofil (9) ausgebildet ist.

7. Stoßenergieaufnahmevorrichtung nach Anspruch 1,
**dadurch gekennzeichnet,**
daß der Zylinder (5) mit einer Zufuhrleitung (12) für ein Druckmittel und das Ausfahrelement (2) kolbenartig ausgebildet ist, wobei die Auslöseeinrichtung (10) bei Erkennen eines bevorstehenden Fahrzeugaufpralls das Ausfahrelement (2) mit Druck beaufschlagt.

8. Stoßenergieaufnahmevorrichtung nach Anspruch 7,
**dadurch gekennzeichnet,**
daß als Druckmittel zur Beaufschlagung des Ausfahrelementes (2) mit Druck Öl vorgesehen ist.

9. Stoßenergieaufnahmevorrichtung nach Anspruch 7,
**dadurch gekennzeichnet,**
daß als Druckmittel zur Beaufschlagung des Ausfahrelementes (2) mit Druck Druckgas vorgesehen ist, welches durch die Auslöseeinrichtung (10) pyrotechnisch in den Zylinder schießbar ist.

10. Stoßenergieaufnahmevorrichtung nach Anspruch 1,
**dadurch gekennzeichnet,**
daß in dem Zylinder (5) zur Verschiebung des Ausfahrelementes (2) in seine Arbeitsposition eine vorgespannt eingebaute Druckfeder angeordnet ist, welche durch die Auslöseeinrichtung bei Erkennen eines bevorstehenden Fahrzeugaufpralls entriegelbar ist.

11. Stoßenergieaufnahmevorrichtung nach Anspruch 1,
**dadurch gekennzeichnet,**
daß der Fahrzeuglängsträger (6) an seinem dem Prallelement (4) zugewandten Endbereich mit einem Crash-Element (6A) ausgebildet ist, wobei die Stülpprofileinrichtung (7) an dem Crash-Element (6A) befestigt ist.

12. Stoßenergieaufnahmevorrichtung nach Anspruch 11,
**dadurch gekennzeichnet,**
daß der Zylinder (5) und wenigstens ein Teil des Ausfahrelementes (2) in der Deformationsposition in einen an das Crash-Element (6A) angrenzenden Bereich des Fahrzeuglängsträgers (6) verschoben ist.
